(19) Europäisches Patentamt
European Patent Office
Office européen des brevets

(11) **EP 1 320 920 B1**

(12) **FASCICULE DE BREVET EUROPEEN**

(45) Date de publication et mention de la délivrance du brevet:
**19.08.2015 Bulletin 2015/34**

(21) Numéro de dépôt: **01969864.6**

(22) Date de dépôt: **10.09.2001**

(51) Int Cl.:
*H02M 7/48* *(2007.01)*    *H02M 5/293* *(2006.01)*

(86) Numéro de dépôt international:
**PCT/FR2001/002805**

(87) Numéro de publication internationale:
**WO 2002/023708 (21.03.2002 Gazette 2002/12)**

(54) **DISPOSITIF DE CONVERSION D'ENERGIE ELECTRIQUE A DECOUPAGE**

SCHALTNETZTEIL

CUTTING ELECTRIC POWER CONVERTER

(84) Etats contractants désignés:
**AT BE CH CY DE DK ES FI FR GB GR IE IT LI LU MC NL PT SE TR**

(30) Priorité: **12.09.2000 FR 0011611**

(43) Date de publication de la demande:
**25.06.2003 Bulletin 2003/26**

(73) Titulaires:
• **CENTRE NATIONAL DE LA RECHERCHE SCIENTIFIQUE -CNRS-**
**75016 Paris (FR)**
• **C.I.R.T.E.M.**
**31319 Labege Cedex (FR)**
• **INSTITUT NATIONAL POLYTECHNIQUE DE TOULOUSE (I.N.P.T.)**
**31029 Toulouse Cédex 4 (FR)**

(72) Inventeurs:
• **MEYNARD, Thierry**
**31240 L'Union (FR)**
• **LEFEUVRE, Elie**
**12100 Millau (FR)**

(74) Mandataire: **Habasque, Etienne J. Jean-François**
**Cabinet Lavoix**
**2, place d'Estienne d'Orves**
**75441 Paris Cedex 09 (FR)**

(56) Documents cités:
**GB-A- 2 294 821    US-A- 5 737 201**

• **CARRERE P ET AL: "4000V-300A EIGHT-LEVEL IGBT INVERTER LEG" EUROPEAN CONFERENCE ON POWER ELECTRONICS AND APPLICATIONS,B,BRUSSELS, EPE ASSOCIATION, vol. CONF. 6, 19 septembre 1995 (1995-09-19), pages 1106-1111, XP000537504**

EP 1 320 920 B1

**Description**

La présente invention concerne un dispositif de conversion réversible d'énergie électrique à découpage.

Plus particulièrement, l'invention se rapporte à un dispositif de conversion réversible d'énergie électrique à découpage entre une source de tension alternative et une source de courant alternatif, comprenant un nombre pair de cellules de commutation comportant chacune un premier et un second interrupteurs unidirectionnels en tension et bidirectionnels en courant, des condensateurs associés aux cellules de commutation et adaptés pour maintenir aux bornes des cellules une tension de charge nulle ou égale à une, fraction prédéterminée de la tension de la source de tension, et des dispositifs de commande connectés chacun à une cellule de commutation et adaptés pour commander les commutations des premiers et seconds interrupteurs de la cellule, une première moitié des cellules étant adaptée pour traiter l'alternance positive de la tension de la source de tension et la seconde moitié des cellules étant adaptée pour traiter l'alternance négative de la tension de la source de tension.

Dans la suite, on entend par « cellule de commutation » un ensemble constitué de deux interrupteurs commandés en états opposés par des dispositifs de commande leur fournissant un signal électrique de commande.

Ainsi, les deux interrupteurs d'une cellule ne peuvent pas être simultanément à l'état bloqué. De même, ils ne peuvent pas être.simultanément à l'état conducteur, sauf lorsque les tensions maintenues respectivement entre leurs premières bornes et leurs secondes bornes sont égales, et notamment lorsqu'elles sont nulles.

Un tel dispositif de conversion est décrit dans l'article de B.-H. Kwon, B.-D. Min et J.-H Kim, intitulé « Novel topologies of AC choppers », publié dans IEE Proceedings on Electr. Power Appl., pages 323-330, volume 143, n° 4 de juillet 1996.

Il comporte deux cellules de commutation associées chacune à un condensateur.

Une première cellule est adaptée pour traiter l'alternance positive de la tension de la source de tension et est connectée à l'une seulement des deux bornes de la source de tension.

La seconde cellule est adaptée pour traiter l'alternance négative de la tension de la source de tension et est connectée à l'autre seulement des deux bornes de la source de tension.

Un avantage de cette structure est de permettre l'utilisation de cellules de commutation comprenant des interrupteurs unidirectionnels en tension et bidirectionnels en courant, dont la réalisation pratique est simple.

Par contre, dans ce dispositif la source de courant est connectée d'une part entre les deux interrupteurs de la première cellule et d'autre part entre les deux interrupteurs de la seconde cellule. Cette contrainte a par exemple pour conséquence l'impossibilité de connecter l'une des deux bornes de la source de courant à l'une des deux bornes de la source de tension ou à un point du dispositif de niveau de potentiel prédéterminé, ce qui peut être recommandé pour certaines applications.

Le document US 5 737 201 décrit un dispositif de conversion réversible d'énergie électrique à découpage entre une source de tension alternative et une source de courant alternatif, comprenant des cellules de commutation dont les interrupteurs bidirectionnels à la fois en courant et en tension. Les cellules de commutation ne sont cependant pas adaptées à traiter l'alternance positive ou négative de la source de tension.

Plus précisément le document US 5 737 201 décrit un dispositif de conversion réversible d'énergie électrique à découpage entre une source de tension, alternative et une source de courant alternatif, comprenant un nombre pair de cellules de commutation comportant chacune un premier et un second interrupteurs bidirectionnels en tension et bidirectionnels en courant, des condensateurs associés aux cellules de commutation et adaptés pour maintenir aux bornes des cellules une tension de charge nulle ou égale à une fraction prédéterminée de la tension de la source de tension, et des dispositifs de commande connectés chacun à une cellule de commutation et adaptés pour commander les commutations des premiers et seconds interrupteurs de la cellule, dans lequel un premier, groupe d'interrupteurs est formé par les premiers interrupteurs des cellules de commutation connectés en série. entre une première borne de la source de tension et une première borne de la source de courant, et dans lequel un second groupe d'interrupteurs est formé par les seconds interrupteurs des cellules de commutation connectés en série entre une seconde borne de la source de tension et la première borne de la source de courant.

Le document GB 2 294821 décrit un dispositif de conversion dont la topologie est proche de celui de l'invention mais raccordé entre deux sources de tension alternative.

L'invention vise à remédier aux inconvénients d'un dispositif de conversion réversible d'énergie électrique à découpage classique, en créant un dispositif permettant de connecter librement l'une des deux bornes de la source de courant à un point quelconque du circuit, tel que par exemple l'une des deux bornes de la source de tension.

L'invention a donc pour objet un dispositif de conversion réversible d'énergie électrique à découpage entre une source de tension alternative et une source de courant alternatif, comprenant un nombre pair de cellules de commutation comportant chacune un premier et un second interrupteurs unidirectionnels en tension et bidirectionnels en courant, des condensateurs associés aux cellules de commutation et adaptés pour maintenir aux bornes des cellules une tension de charge nulle ou égale à une fraction prédéterminée de la tension de la source de tension, et des dispositifs de commande connectés chacun à une cellule de commutation et adaptés pour commander les commutations des premiers et seconds interrupteurs de la cellule, une première moitié des cellules étant adaptée pour traiter l'alternance positive de la tension de la source de tension et la seconde moitié des cellules étant adaptée pour traiter l'alternance négative de la tension de la source de tension, caractérisé en ce qu'un premier groupe d'interrupteurs est formé par les premiers interrupteurs des cellules de commutation connectés en série entre une première borne de la source de tension et une première borne de la source de courant, en ce qu'un second groupe d'interrupteurs est formé par les seconds interrupteurs des cellules de commutation connectés en série entre une seconde borne de la source de tension et la première borne de la source de courant, les caractères unidirectionnels en tension des premiers et seconds interrupteurs appartenant à la première moitié des cellules étant respectivement opposés à ceux des premiers et seconds interrupteurs appartenant à la seconde moitié des cellules.

Ainsi, un dispositif selon l'invention permet de choisir librement le point de connexion de la seconde borne de la source de courant, ce qui peut se révérer être un atout majeur pour certaines applications.

Le dispositif de conversion réversible d'énergie électrique à découpage selon l'invention peut en outre comporter une ou plusieurs des caractéristiques suivantes :

- une seconde borne de la source de courant est connectée à l'une quelconque des première et seconde bornes de la source de tension, formant ainsi un point neutre du dispositif, commun à la source de tension et à la source de courant ;
- les interrupteurs de chaque groupe appartenant à la première moitié des cellules, sont connectés en alternance avec les interrupteurs de chaque groupe respectif appartenant à la seconde moitié des cellules ;
- les dispositifs de commande sont adaptés pour commander les commutations des deux interrupteurs de chaque cellule de la première moitié des cellules, en leur assurant des états opposés et pour maintenir conducteurs les deux interrupteurs de chaque cellule de la seconde moitié des cellules, lorsque la tension de la source de tension est positive, et inversement, pour commander les commutations des deux interrupteurs de chaque cellule de la seconde moitié des cellules, en leur assurant des états opposés et pour maintenir conducteurs les deux interrupteurs de chaque cellule de la première moitié des cellules, lorsque la tension de la source de tension est négative ; et
- toutes les cellules de la première moitié des cellules, lorsque la tension de la source de tension est positive, et toutes les cellules de la seconde moitié des cellules, lorsque la tension de la source de tension est négative, sont commandées avec des rapports cycliques sensiblement égaux et des déphasages sensiblement égaux entre deux cellules successives d'une même moitié des cellules.

L'invention a également pour objet un dispositif de conversion réversible d'énergie électrique polyphasée à découpage entre une multiplicité de sources de tension et une multiplicité de sources de courant caractérisé en ce qu'il comporte une multiplicité de dispositifs, dont les sources de tension et de courant sont respectivement connectées entre elles.

Le dispositif de conversion réversible d'énergie électrique polyphasée à découpage selon l'invention peut en outre comporter l'une des caractéristiques suivantes :

- les secondes bornes de toutes les sources de courant sont connectées entre elles, formant ainsi un point neutre dès sources de courant, et l'une des bornes de chaque source de tension est connectée à un même point, formant ainsi un point neutre des sources de tension ; et
- le point neutre des sources de courant et le point neutre des sources de tension sont connectés entre eux, formant ainsi un point neutre du dispositif, commun à toutes les sources de tension et de courant.

L'invention sera mieux comprise à l'aide de la description qui va suivre, donnée uniquement à titre d'exemple et faite en se référant aux dessins annexés sur lesquels :

- la figure 1 est un schéma électrique de principe d'un dispositif de conversion réversible d'énergie électrique selon l'invention ;
- la figure 2 représente l'allure de la tension aux bornes de la source de tension alternative du dispositif de conversion représenté à la figure 1 ;
- la figure 3 est un schéma électrique de principe d'un dispositif de conversion réversible d'énergie électrique selon l'invention, dans le cas où il comporte deux cellules, détaillant en outre un ensemble de commande de ce dispositif, pendant une alternance positive de la tension de la source de tension ;
- la figure 4 représente l'allure de la tension aux bornes de la source de tension alternative, des signaux de commande de l'ensemble de commande des cellules de commutation et de la tension de sortie aux bornes de la source de courant alternatif, pour le dispositif représenté à la figure 3 ;
- la figure 5 est un schéma électrique de principe d'un dispositif de conversion réversible d'énergie électrique selon l'invention, dans le cas où il comporte deux cellules, détaillant en outre un ensemble de commande de ce dispositif, pendant une alternance négative de la tension de la source de tension ;
- la figure 6 représente l'allure de la tension aux bornes de la source de tension alternative, des signaux de commande de l'ensemble de commande des cellules de commutation et de la tension de sortie aux bornes de la source de courant alternatif, pour le dispositif représenté à la figure 5 ; et

- la figure 7 est un schéma électrique de principe d'un dispositif de conversion réversible d'énergie électrique triphasé, selon un autre aspect de l'invention, dans lequel l'ensemble de commande n'est pas représenté.

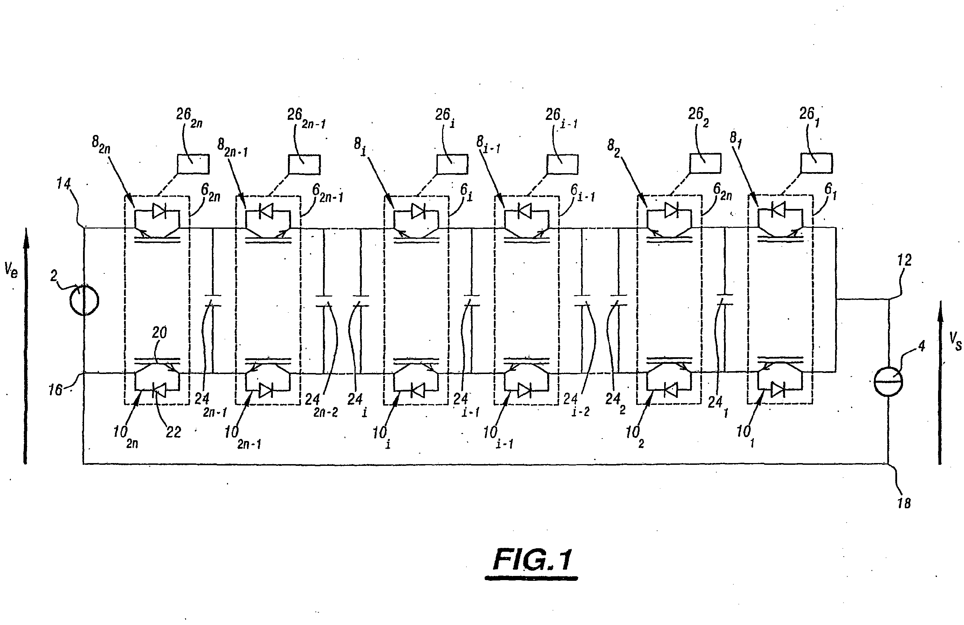

Le dispositif de conversion réversible d'énergie électrique à découpage représenté à la figure 1 comporte une source de tension alternative 2 assurant une différence de potentiel sinusoïdale d'amplitude $V_e$ entre ses bornes et une source de courant alternatif 4 supportant une différence de potentiel d'amplitude $V_s$ entre ses bornes.

Le dispositif comporte en outre 2n cellules de commutation $6_1$, ..., $6_{2n}$, n étant un entier supérieur ou égal à 1.

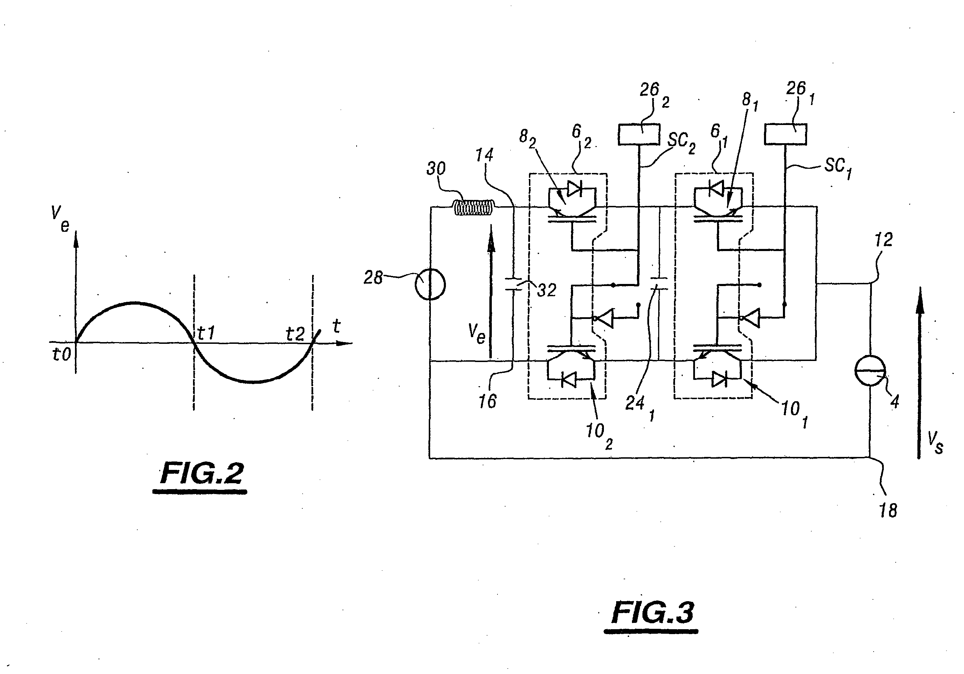

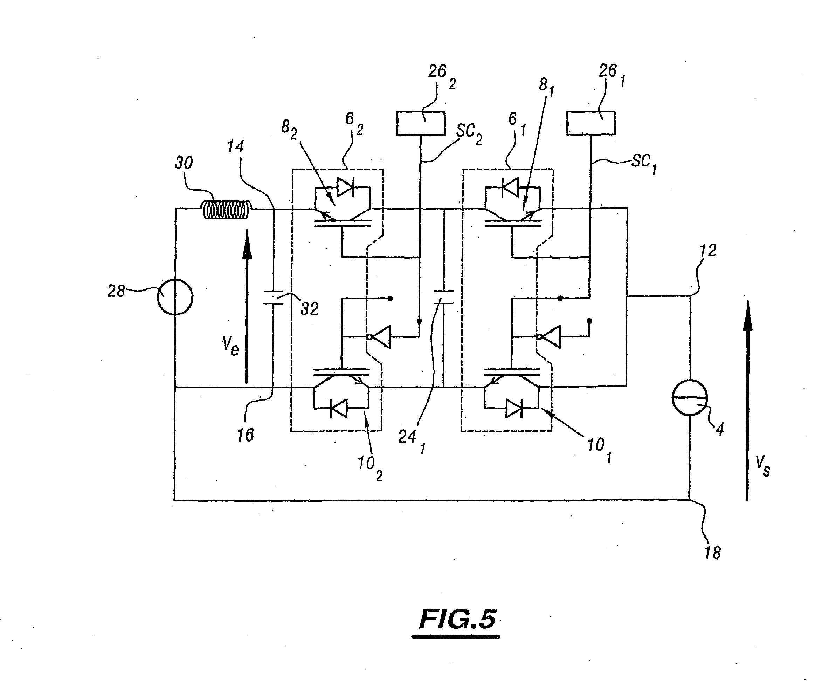

Chaque cellule de commutation. $6_i$ est constituée de deux interrupteurs $8_i$ et $10_i$. La commande de ces interrupteurs sera détaillée lors de la description des figures 3 et 5.

Les 2n interrupteurs $8_1$; ..., $8_{2n}$ constituent un premier groupe d'interrupteurs et sont connectés en série dans l'ordre croissant de leurs indices entre une première borne 12 de la source de courant 4. et une première borne 14 de la source de tension 2. De même, les 2n interrupteurs $10_1$, ..., $10_{2n}$ constituent un second groupe d'interrupteurs ét sont connectés en série dans l'ordre croissant de leurs indices entre la première borne 12 de la source de courant 4 et une seconde borne 16 de la source de tension 2:

La seconde borne 16 de la source de tension 2 est en outre connectée à une seconde borne 18 de la source de courant 4, formant ainsi un point neutre du dispositif, commun à la source de tension 2 et à la source de courant 4.

Les interrupteurs du dispositif sont tous de même type, c'est-à-dire unidirectionnels en tension et bidirectionnels en courant et sont constitués par des transistors IGBT 20 associés chacun à une diode 22 en antiparallèle. Chacun de ces transistors IGBT peut être remplacé selon les applications par un transistor bipolaire Darlington, Most, GTO, etc.

Entre les 2n cellules $6_1$, ..., $6_{2n}$ sont connectés en outre 2n-1 condensateurs $24_1$, ..., $24_{2n-1}$. Chaque condensateur $24_i$ est raccordé d'une part au point de connexion des deux interrupteurs $8_i$ et $8_{i+1}$ et d'autre part au point de connexion des deux interrupteurs $10_i$ et $10_{i+1}$.

Ainsi, chaque condensateur $24_i$ maintient aux bornes respectives de chaque cellule $6_i$ une tension de charge nulle ou égale à une fraction prédéterminée de la tension $V_e$ de la source de tension 2, en fonction de l'état des interrupteurs $8_1$, .... $8_{2n}$, $10_1$, ..., $10_{2n}$.

Une première moitié de cellules $6_1$, ..., $6_{21-1}$, ..., $6_{2n-1}$ est disposée de façon à traiter l'alternance positive de la tension $V_e$ de la source de tension 2. En effet, pour chaque cellule $6_{2i-1}$ de cette première moitié de cellules, l'interrupteur $10_{2i-1}$ unidirectionnel en tension, est disposé pour supporter une différence de potentiel positive entre sa borne la plus proche de la source de courant 4 et sa borne la plus proche de la source de tension 2, et pour interdire une différence de potentiel dans l'autre sens. De façon classique, l'autre interrupteur $8_{2i-1}$ de la cellule $6_{2i-1}$ est disposé en sens inverse.

De même, une seconde moitié de cellules $6_2$, ..., $6_{2i}$, ..., $6_{2n}$ est disposée de façon à traiter l'alternance négative de la tension $V_e$ de la source de tension 2. En effet, pour chaque cellule $6_{2i}$ de cette seconde moitié de cellules, l'interrupteur $10_{2i}$ unidirectionnel en tension est disposé pour supporter une différence de potentiel négative entre sa borne la plus proche de la source de courant 4 et sa borne la plus proche de la source de tension 2, et pour interdire une différence de potentiel dans l'autre sens. L'autre interrupteur $8_{2i}$ de la cellule $6_{2i}$ est disposé en sens inverse.

Enfin, les cellules de commutation $6_1$, ..., $6_n$ sont chacune commandées par des dispositifs de commande $26_1$, ..., $26_{2n}$ qui seront détaillés lors de la description des figures 3 et 5.

La figure 2 représente l'allure de la tension $V_e$ aux bornes de la source de tension 2 au cours du temps, lors du fonctionnement du dispositif décrit précédemment.

Cette tension $V_e$ est alternative et, par exemple, sinusoïdale. Elle comporte au cours d'une période quelconque une alternance positive pendant une première demi-période de cette période, comprise entre un instant $t_0$ et un instant $t_1$, et une alternance négative pendant une seconde demi-période de cette période, comprise entre un instant $t_1$ et un instant $t_2$.

Un cas particulier du dispositif décrit précédemment est représenté à la figure 3.

Sur cette figure, le dispositif comporte deux cellules de commutation $6_1$ et $6_2$ et deux dispositifs $26_1$ et $26_2$ de commande de ces cellules de commutation. Il est ici représenté lors de l'alternance positive de la tension $V_e$ de la source de tension 2.

En effet, lors de cette alternance, le dispositif de commande $26_1$ commande la commutation des deux interrupteurs $8_1$ et $10_1$ en leur assurant des états opposés, alors que le dispositif de commande $26_2$ commande la cellule $6_2$ en maintenant conducteurs les deux interrupteurs $8_2$ et $10_2$. Pour cela, les dispositifs $26_1$ et $26_2$ transmettent respectivement des signaux de commande $SC_1$ et $SC_2$ aux cellules de commutation $6_1$ et $6_2$.

En outre, la source de tension alternative 2 est ici réalisée de façon classique au moyen du montage en parallèle d'une source de tension réelle 28 associée en série à une inductance 30 d'une part, et d'un condensateur 32 d'autre part. Les deux bornes du condensateur 32 constituent les -deux bornes 14 et 16 de la source de tension 2 décrite précédemment.

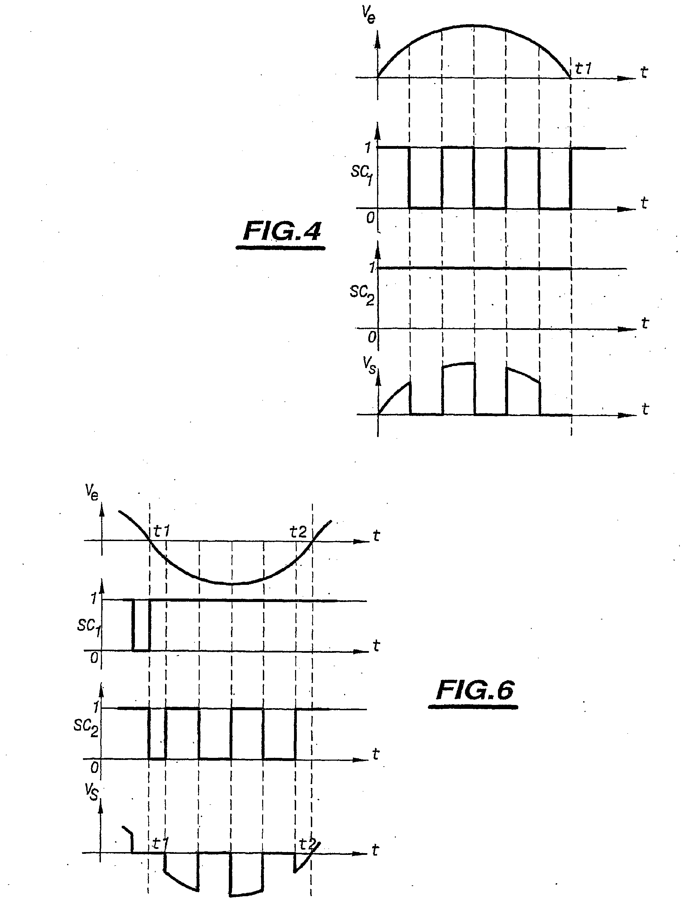

Le fonctionnement du dispositif représenté à la figure 3, lors de l'alternance positive de la source de tension 2, va maintenant être décrit à l'aide de la figure 4.

Sur cette figure, la tension $V_e$ comprise entre les deux bornes 16 et 14 de la source de tension 2 est représenté entre les instants $t_0$ et $t_1$, c'est-à-dire lors de l'alternance positive.

Sur cette figure sont également représentés les signaux de commande $SC_1$ et $SC_2$ fournis en sortie des deux dispositifs de -commande $26_1$ et $26_2$. La valeur de ces signaux est à chaque instant égale à 0 ou à 1.

Un interrupteur quelconque du dispositif de conversion est maintenu conducteur lorsqu'il reçoit un signal de commande égal à 1 et maintenu bloqué lorsqu'il reçoit un signal de commande égal à 0.

Ainsi, entre les instants $t_0$ et $t_1$, le signal $SC_2$ est égal à 1 et commande directement les deux interrupteurs $8_2$. et $10_2$ en les maintenant conducteurs, de sorte que la tension aux bornes du condensateur $24_1$ est à chaque instant égale à $V_e$.

Pendant ce temps, le signal $SC_1$ est un signal périodique en créneau dont la période est nettement inférieure à la durée $t_1 - t_0$. L'interrupteur $8_1$ est directement commandé par ce signal alors que l'interrupteur $10_1$ est commandé par le signal $\overline{SC_1}$, complément à 1 du signal $SC_1$. Ainsi, lors de l'alternance positive, la tension $V_e$ de la source de tension est supportée alternativement par l'interrupteur $10_1$ lorsque celui-ci est bloqué et par l'interrupteur $8_1$ lorsque l'interrupteur $10_1$ est conducteur.

La tension de sortie résultante aux bornes 18 et 12 de la source de courant alternatif 4 est également représentée à la figure 4. Il s'agit d'une tension alternative hachée dont la valeur est soit nulle soit égale $V_e$, étant donné que cette tension est égale à la somme des tensions aux bornes des interrupteurs $10_1$ et $10_2$.

Le dispositif à deux cellules, décrit précédemment lors de l'alternance positive, est représenté à la figure 5 lors de l'alternance négative de la tension $V_e$ de la source de tension 2.

Lors de cette alternance, le dispositif de commande $26_1$ commande la cellule $6_1$ en maintenant conducteurs les deux interrupteurs $8_1$ et $10_1$, alors que le dispositif de commande $26_2$ commande la commutation des deux interrupteurs $8_2$ et $10_2$ en leur assurant des états opposés.

Le fonctionnement du dispositif représenté à la figure 5, lors de l'alternance négative de la source de tension 2, va maintenant être décrit à l'aide de la figure 6.

Sur cette figure, la tension $V_e$ est représentée entre les instants $t_1$ et $t_2$, c'est-à-dire lors de l'alternance négative de la source de tension 2.

Sur cette figure sont également représentés les signaux de commande $SC_1$ et $SC_2$. Entre les instants $t_1$ et $t_2$, le signal $SC_1$ est égal à 1 et commande directement les deux interrupteurs $8_1$ et $10_1$ en les maintenant conducteurs, de sorte que la tension aux bornes du condensateur $24_1$ est nulle.

Pendant ce temps, le signal $SC_2$ est un signal périodique en créneau dont la période est nettement inférieure à la durée $t_2-t_1$, comme précédemment. L'interrupteur $8_2$ est directement commandé par ce signal alors que l'interrupteur $10_2$ est commandé par le signal $\overline{SC_2}$, complément à 1 du signal $SC_2$. Ainsi, lors de l'alternance négative, la tension $V_e$ de la source de tension est supportée alternativement par l'interrupteur $10_2$ lorsque celui-ci est bloqué et par l'interrupteur $8_2$ lorsque l'interrupteur $10_2$ est-conducteur.

La tension de sortie résultante aux bornes 18 et 12 de la source de courant alternatif 4 est également représentée à la figure 6. Il s'agit comme précédemment d'une tension alternative hachée dont la valeur est soit nulle soit égale à $V_e$.

On obtient donc bien au cours d'une période de la tension de la source de tension 2 une tension de sortie hachée égale à chaque instant soit à 0 soit à la tension de la source de tension 2.

On généralise la commande du dispositif représentée aux figures 3 et 5, à la commande du dispositif représentée à la figure 1, en adaptant les dispositifs de commande afin que toutes les cellules de la première moitié des cellules, lorsque la tension de la source de tension est positive, et toutes les cellules de la seconde moitié des cellules, lorsque la tension de la source de tension est négative, soient commandées avec des rapports cycliques sensiblement égaux et des déphasages des signaux de commande $SC_1$ et $SC_2$ sensiblement égaux à $\dfrac{2\pi}{n}$ entre deux cellules successives d'une même moitié de cellules.

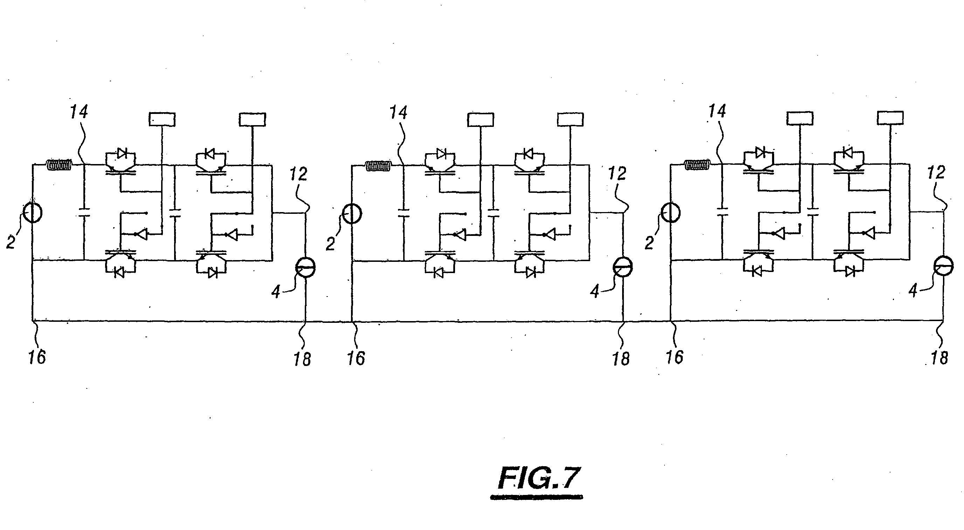

Selon un autre aspect de l'invention, le dispositif de conversion réversible d'énergie électrique triphasé à découpage entre une multiplicité de sources de tension et une multiplicité de sources de courant, représenté à la figure 7, est obtenu par l'interconnexion de trois dispositifs tels que ceux décrits précédemment, par exemple trois dispositifs comportant chacun deux cellules de commutation. L'interconnexion de ces trois dispositifs est assurée par la connexion des trois points neutres respectifs de ces dispositifs. On forme ainsi un point neutre du dispositif polyphasé, commun à toutes les sources de tension et de courant.

Il apparaît clairement qu'un dispositif de conversion réversible d'énergie électrique à découpage monophasé ou polyphasé selon l'invention conserve la fonctionnalité de découpage de la tension de sortie $V_s$ du dispositif classique, tout en permettant à un utilisateur de connecter librement l'une des bornes de chaque source de courant 4 du dispositif à un niveau de potentiel prédéterminé. Dans un cas particulier, ce niveau de potentiel prédéterminé peut être commun à celui d'une des deux bornes de chaque source de tension 2.

On notera également que l'invention n'est pas limitée au mode de réalisation décrit.

Ainsi, en variante, les cellules de commutation

$6_1$, ..., $6_{2n}$ ne sont pas connectées en alternance, entre les cellules appartenant à la première moitié des cellules et les cellules appartenant à la seconde moitié des cellules, comme -décrit précédemment. Par exemple, les cellules appartenant à la -première moitié sont les cellules $6_1$ à $6_n$ et les cellules appartenant à la seconde moitié sont les cellules $6_{n+1}$ à $6_{2n}$.

En variante également, l'interconnexion des trois dispositifs de conversion pour former le dispositif de conversion réversible d'énergie électrique triphasé à découpage représenté à la figure 7, est assurée par l'interconnexion d'une part des trois sources de courant et d'autre part des trois sources de tensions. Ces interconnexions peuvent être réalisées chacune selon une configuration de type « triangle » ou « étoile » au choix, ces configurations étant considérées comme classiques.

**Revendications**

1. Dispositif de conversion réversible d'énergie électrique à découpage entre une source de tension alternative (2) et une source de courant alternatif (4), comprenant un nombre pair de cellules de commutation ($6_1$, ... $6_{2n}$) comportant chacune un premier ($8_1$, ..., $8_{2n}$) et un second ($10_1$, ..., $10_{2n}$) interrupteurs unidirectionnels en tension et bidirectionnels en courant, des condensateurs ($24_1$, ..., $24_{2n-1}$) associés aux cellules de commutation ($6_1$, ..., $6_{2n}$) et adaptés pour maintenir aux bornes des cellules une tension de charge nulle ou égale à une fraction prédéterminée de la tension ($V_e$) de la source de tension (2), et des dispositifs de commande ($26_1$, ..., $26_{2n}$) connectés chacun à une cellule de commutation et adaptés pour commander les commutations des premiers et seconds interrupteurs ($8_1$, ...,$8_{2n}$, $10_1$, ..., $10_{2n}$) de la cellule, une première moitié ($6_1$, .... $6_{2i-1}$, ..., $6_{2n-1}$) des cellules étant adaptée pour traiter l'alternance positive de la tension ($V_e$) de la source de tension (2) et la seconde moitié ($6_2$, .... $6_{2l}$), ..., $6_{2n}$) des cellules étant adaptée pour traiter l'alternance négative de la tension ($V_e$) de la source de tension (2), dans lequel un premier groupe d'interrupteurs est formé par les premiers interrupteurs ($8_1$, ..., $8_{2n}$) des cellules de commutation connectés en série entre une première borne (14) de la source de tension (2) et une première borne (12) de la source de courant (4), et un second groupe d'interrupteurs est formé par les seconds interrupteurs ($10_1$, ..., $10_{2n}$) des cellules de commutation connectés en série entre une seconde borne (16) de la source de tension (2) et la première borne (12) de la source de courant (4), les caractères unidirectionnels en tension des premiers et seconds interrupteurs ($8_1$, ..., $8_{2i-1}$, ..., $8_{2n-1}$, $10_1$, $10_{2i-1}$, ..., $10_{2n-1}$) appartenant à la première moitié des cellules étant respectivement opposés à ceux des premiers et seconds interrupteurs ($8_2$, ..., $8_{2i}$, ..., $8_{2n}$, $10_2$, ...,

$10_{2l}$, ..., $10_{2n}$) appartenant à la seconde moitié des cellules.

2. Dispositif de conversion réversible d'énergie électrique à découpage selon la revendication 1, **caractérisé en ce qu'**une seconde borne (18) de la source de courant (4) est connectée à l'une quelconque des première et seconde bornés (14, 16) de la source de tension (2), formant ainsi un point neutre du dispositif, commun à la source de tension et à la source de courant.

3. Dispositif de conversion réversible d'énergie électrique à découpage selon la revendication 1 ou 2, **caractérisé en ce que** les interrupteurs ($8_1$, .... $8_{2i-1}$, ..., $8_{2n-1}$, $10_1$, ..., $10_{2i-1}$ ...., ,$10_{2n-1}$) de chaque groupe appartenant à la première moitié des cellules, sont connectés en alternance avec les interrupteurs ($8_2$, ..., $8_{2i}$, ..., $8_{2n}$, $10_2$, ..., $10_{2i}$, ...., $10_{2n}$) de chaque groupe respectif appartenant à la seconde moitié des cellules.

4. Dispositif de conversion reversible d'énergie électrique à découpage selon l'une des revendications 1 à 3, **caractérisé en ce que** les dispositifs de commande ($26_1$, ..., $26_{2n}$) sont adaptés pour commander les commutations des deux interrupteurs de chaque cellule ($6_1$, .... $6_{2i-1}$, ..,, $6_{2n-1}$) de la première moitié des cellules, en leur assurant des états opposés et pour maintenir conducteurs les deux interrupteurs de chaque cellule ($6_2$, .... $6_{2i}$, ..., $6_{2n}$) de la seconde moitié des cellules, lorsque la tension ($V_e$) de la source de tension est positive, et inversement, pour commander les commutations des deux interrupteurs de chaque cellule ($6_2$, ..., $6_{2i}$, .... $6_{2n}$) de la seconde moitié des cellules, en leur assurant des états opposés et pour maintenir conducteurs les deux interrupteurs de chaque cellule ($6_1$, ..., $6_{2i-1}$, ..., $6_{2n-1}$) de la première moitié des cellules, lorsque la tension ($V_e$) de la source de tension est négative.

5. Dispositif de conversion réversible d'énergie électrique à découpage selon la revendication 4, **caractérisé en ce que** toutes les cellules ($6_1$, ..., $6_{2i-1}$, ..., $6_{2n-1}$) de la première moitié des cellules, lorsque la tension de la source de tension est positive, et toutes les cellules ($6_2$, ..., $6_{2i}$, .... $6_{2n}$) de la seconde moitié des cellules, lorsque la tension de la source de tension est négative, sont commandées avec des rapports cycliques sensiblement égaux et des déphasages sensiblement égaux entre deux cellules successives d'une même moitié des cellules.

6. Dispositif de conversion réversible d'énergie électrique polyphasée à découpage entre une multiplicité de sources de tension et une multiplicité de sources de courant **caractérisé en ce qu'**il comporte une multiplicité de dispositifs selon l'une des revendications 1 à 4, dont les sources de tension (2) et de courant (4) sont respectivement connectées entre elles.

7. Dispositif de conversion réversible d'énergie électrique polyphasée à découpage selon la revendications 6, **caractérisé en ce que** les secondes bornes (18) de toutes les sources de courant (4) sont connectées entre elles, formant ainsi un point neutre des sources de courant, et **en ce que** l'une des bornes (14, 16) de chaque source de tension (2) est connectée à un même point, formant ainsi un point neutre des sources de tension.

8. Dispositif de conversion réversible d'énergie électrique polyphasée à découpage selon la revendication 6, **caractérisé en ce que** le point neutre des sources de courant (4) et le point neutre des sources de tension (2) sont connectés entre eux, formant ainsi un point neutre du dispositif, commun à toutes les sources de tension et de courant.

**Patentansprüche**

1. Schaltvorrichtung zur reversiblen Umwandlung elektrischer Energie zwischen einer Wechselspannungsquelle (2) und einer Wechselstromquelle (4), die eine paarige Anzahl von Umschaltzellen ($6_1$, ..., $6_{2n}$) umfasst, die jeweils einen ersten ($8_1$, ..., $8_{2n}$) und einen zweiten ($10_1$, ..., $10_{2n}$) in Spannung eindirektionalen und in Strom bidirektionalen Schalter, Kondensatoren ($24_1$, ..., $24_{2n-1}$), die den Umschaltzellen ($6_1$, ..., $6_{2n}$) zugeordnet und ausgebildet sind, um an den Klemmen der Zellen eine Ladespannung von Null oder gleich einem vorbestimmten bruchteil der Spannung ($V_a$) der Spannungsquelle (2) zu halten, und Steuervorrichtungen ($26_1$, ..., $26_{2n}$), die jeweils mit einer Umschaltzelle verbunden und ausgebildet sind, um die Umschaltungen des ersten und zweiten Schalters ($8_1$, ..., $8_{2n}$, $10_1$, ..., $10_{2n}$) der Zelle zu steuern, wobei eine erste Hälfte ($6_1$, ..., $6_{2i-1}$, ..., $6_{2n-1}$) der Zellen ausgebildet ist, um die positive Halbperiode der Spannung ($V_e$) der Spannungsquelle (2) zu behandeln, und die zweite Hälfte ($6_2$, ..., $6_{2i}$, ..., $6_{2n}$) der Zellen ausgebildet ist, um die negative Halbperiode der Spannung ($V_e$) der Spannungsquelle (2) zu behandeln, wobei eine erste Schaltergruppe von den ersten Schaltern ($8_1$, ..., $8_{2n}$) denen umschaltzellen, zwischen einer ersten Klemme verbunden sind, (14) der Spannungsquelle (2) und einer ersten Klemme (12) der Stromquelle (4) gebildet ist, und eine zweite Schaltergruppe von den zweiten Schaltern ($10_1$, ..., $10_{2n}$) denen umschaltzellen, zwischen einer zweiten Klemme verbunden sind, (16) der Spannungsquelle (2) und der ersten Klemme (12) der Stromquelle (4) gebildet ist, wobei die eindirektionalen Charaktere in Spannung der ersten

und zweiten Schalter ($8_1$, ..., $8_{2i-1}$, ..., $8_{2n-1}$, $10_1$, ..., $10_{2i-1}$, ..., $10_{2n-1}$), die zur erste Hälfte der Zellen gehören, jeweils umgekehrt zu denen der ersten und zweiten Schalter ($8_2$, ..., $8_{2i}$, ..., $8_{2n}$, $10_2$, ..., $10_{2i}$, ..., $10_{2n}$) sind, die zur zweiten Hälfte der Zellen gehören.

2. Schaltvorrichtung zur reversiblen Umwandlung elektrischer Energie nach Anspruch 1, **dadurch gekennzeichnet, dass** eine zweite Klemme (18) der Stromquelle (4) mit einer ersten und zweiten Klemmen (14, 16) der Spannungsquelle (2) verbunden ist und damit einen neutralen Punkt der Vorrichtung bildet, welcher der Spannungsquelle und der Stromquelle gemeinsam ist.

3. Schaltvorrichtung zur reversiblen Umwandlung elektrischer Energie nach Anspruch 1 oder 2, **dadurch gekennzeichnet, dass** die Schalter ($8_1$, ..., $8_{2i-1}$, ..., $8_{2n-1}$, $10_1$, ..., $10_{2i-1}$, ..., $10_{2n-1}$) jeder Gruppe, die zur ersten Hälfte der Zellen gehört, in Halbperiode mit den Schaltern ($8_2$, ..., $8_{2i}$, ..., $8_{2n}$, $10_2$, ..., $10_{2i}$, ..., $10_{2n}$) jeder jeweiligen Gruppe verbunden sind, die zur zweiten Hälfte der Zellen gehört.

4. Schaltvorrichtung zur reversiblen Umwandlung elektrischer Energie nach einem der Ansprüche 1 bis 3, **dadurch gekennzeichnet, dass** die Steuervorrichtungen ($26_1$, ..., $26_{2n}$) ausgebildet sind, um die Umschaltungen der zwei Schalter jeder Zelle ($6_1$, ..., $6_{2i-1}$, ..., $6_{2n-1}$) der ersten Hälfte der Zellen zu steuern, indem sie ihnen entgegengesetzte Zustände sichern, und um die zwei Schalter jeder Zelle ($6_2$, ..., $6_{2i}$, ..., $6_{2n}$) der zweiten Hälfte der Zellen leitend zu halten, wenn die Spannung ($V_e$) der Spannungsquelle positiv ist, und umgekehrt, um die Umschaltungen der zwei Schalter jeder Zelle ($6_2$, ..., $6_{2i}$, ..., $6_{2n}$) der zweiten Hälfte der Zellen zu steuern, indem sie ihnen entgegengesetzte Zustände sichern, und um die zwei Schalter jeder Zelle ($6_1$, ..., $6_{2i-1}$, ..., $6_{2n-1}$) der ersten Hälfte der Zellen leitend zu halten, wenn die Spannung ($V_e$) der Spannungsquelle negativ ist.

5. Schaltvorrichtung zur reversiblen Umwandlung elektrischer Energie nach Anspruch 4, **dadurch gekennzeichnet, dass** alle Zellen ($6_1$, ..., $6_{2i-1}$, ..., $6_{2n-1}$) der ersten Hälfte der Zellen, wenn die Spannung der Spannungsquelle positiv ist, und alle Zellen ($6_2$, ..., $6_{2i}$, ..., $6_{2n}$) der zweiten Hälfte der Zellen, wenn die Spannung der Spannungsquelle negativ ist, mit etwa gleichen zyklischen Verhältnissen und etwa gleichen Phasenverschiebungen zwischen zwei aufeinanderfolgenden Zellen einer selben Hälfte der Zellen gesteuert werden.

6. Schaltvorrichtung zur reversiblen Umwandlung mehrphasiger elektrischer Energie zwischen einer Multiplizität von Spannungsquellen und einer Multiplizität von Stromquellen, **dadurch gekennzeichnet, dass** sie eine Multiplizität von Vorrichtungen nach einem der Ansprüche 1 bis 4 aufweist, deren Spannungs- (2) und Stromquellen (4) jeweils miteinander verbunden sind.

7. Schaltvorrichtung zur reversiblen Umwandlung mehrphasiger elektrischer Energie nach Anspruch 6, **dadurch gekennzeichnet, dass** die zweiten Klemmen (18) aller Stromquellen (4) miteinander verbunden sind, wobei sie dadurch einen neutralen Punkt der Stromquellen bilden, und dass eine der Klemmen (14, 16) jeder Spannungsquelle (2) mit einem selben Punkt verbunden ist, so dass dadurch ein neutraler Punkt der Spannungsquellen gebildet wird.

8. Schaltvorrichtung zur reversiblen Umwandlung mehrphasiger elektrischer Energie nach Anspruch 6, **dadurch gekennzeichnet, dass** der neutrale Punkt der Stromquellen (4) und der neutrale Punkt der Spannungsquellen (2) miteinander verbunden sind, so dass dadurch ein neutraler Punkt der Vorrichtung gebildet wird, der allen Spannungs- und Stromquellen gemeinsam ist.

**Claims**

1. Device for reversible switching conversion of electrical energy between an alternating voltage source (2) and an alternating current source (4), comprising an even number of switching cells ($6_1$, ..., $6_{2n}$) each having a first ($8_1$, ..., $8_{2n}$) and a second ($10_1$, ..., $10_{2n}$) switches which are unidirectional in voltage and bidirectional in current, capacitors ($24_1$, ..., $24_{2n-1}$) associated with the switching cells ($6_1$, ..., $6_{2n}$) and suitable for maintaining at the terminals of the cells a charging voltage at zero or equal to a predetermined fraction of the voltage ($V_e$) of the voltage source (2), and control devices ($26_1$, ..., $26_{2n}$) each connected to a switching cell and suitable for controlling the switching of the first and second switches ($8_1$, ..., $8_{2n}$, $10_1$, ..., $10_{2n}$) of the cell, a first half ($6_1$, ..., $6_{2i-1}$, ..., $6_{2n-1}$) of the cells being suitable for processing the positive alternation of the voltage ($V_e$) of the voltage source (2) and the second half ($6_2$, ..., $6_{2i}$, ..., $6_{2n}$) of the cells being suitable for processing the negative alternation of the voltage ($V_e$) of the voltage source (2), in which a first group of switches is formed by the first switches ($8_1$, ..., $8_{2n}$) of the switching cells, which first switches are connected in series between a first terminal (14) of the voltage source (2) and a first terminal (12) of the current source (4), and a second group of switches is formed by the second switches ($10_1$, ..., $10_{2n}$) of the switching cells, which second switches are connected in series between a second terminal (16) of the voltage source (2) and the first terminal (12) of the current source (4), the unidirectional characteristics in voltage of the first and second switches ($8_1$, ..., $8_{2i-1}$, ..., $8_{2n-1}$, $10_1$, ..., $10_{2i-1}$, ..., $10_{2n-1}$) belonging to the first half of the cells being respectively opposed to those of the first and second switches ($8_2$, ..., $8_{2i}$, ..., $8_{2n}$, $10_2$, ..., $10_{2i}$, ..., $10_{2n}$) belonging to the second half of the cells.

2. Device for reversible switching conversion of electrical energy according to claim 1, **characterised in that** a second terminal (18) of the current source (4) is connected to either of the first and second terminals (14, 16) of the voltage source (2), thus forming a neutral point of the device common to the voltage source and to the current source.

3. Device for reversible switching conversion of electrical energy according to claim 1 or 2, **characterised in that** the switches ($8_1$, ..., $8_{2i-1}$ ..., $8_{2n-1}$, $10_1$, ..., $10_{2i-1}$ ..., $10_{2n-1}$) of each group belonging to the first half of the cells are connected in alternation with the switches ($8_2$, ..., $8_{2i}$, ..., $8_{2n}$, $10_2$, ..., $10_{2i}$, ..., $10_{2n}$) of each respective group belonging to the second half of the cells.

4. Device for reversible switching conversion of electrical energy according to any one of claims 1 to 3, **characterised in that** the control devices ($26_1$, ..., $26_{2n}$) are suitable for controlling the switching of the two switches of each cell ($6_1$, ..., $6_{2i-1}$, ..., $6_{2n-1}$) of the first half of the cells, ensuring that they are in opposite states, and for keeping conductive the two switches of each cell ($6_2$, ..., $6_{2i}$, ..., $6_{2n}$) of the second half of the cells when the voltage ($V_e$) of the voltage source is positive, and conversely, for controlling the switching of the two switches of each cell ($6_2$, ..., $6_{2i}$, ..., $6_{2n}$) of the second half of the cells, ensuring that they are in opposite states, and for keeping conductive the two switches of each cell ($6_1$, ..., $6_{2i-1}$, ..., $6_{2n-1}$) of the first half of the cells when the voltage ($V_e$) of the voltage source is negative.

5. Device for reversible switching conversion of electrical energy according to claim 4, **characterised in that** all the cells ($6_1$, ..., $6_{2i-1}$, ..., $6_{2n-1}$) of the first half of the cells, when the voltage of the voltage source is positive, and all the cells ($6_2$, ..., $6_{2i}$, ..., $6_{2n}$) of the second half of the cells, when the voltage of the voltage source is negative, are controlled with substantially equal cyclic ratios and substantially equal phase shifts between two successive cells of a same half of the cells.

6. Device for reversible switching conversion of polyphase electrical energy between a multiplicity of voltage sources and a multiplicity of current sources, **characterised in that** it comprises a multiplicity of devices according to any one of claims 1 to 4, the voltage sources (2) and current sources (4) of which are respectively connected to one another.

7. Device for reversible switching conversion of polyphase electrical energy according to claim 6, **characterised in that** the second terminals (18) of all the current sources (4) are connected to one another, thus forming a neutral point of the current sources, and **in that** one of the terminals (14, 16) of each voltage source (2) is connected to the same point, thus forming a neutral point of the voltage sources.

8. Device for reversible switching conversion of polyphase electrical energy according to claim 6, **characterised in that** the neutral point of the current sources (4) and the neutral point of the voltage sources (2) are connected to one another, thus forming a neutral point of the device common to all of the volt-age and current sources.

*FIG.1*

EP 1 320 920 B1

$V_e$

t0    t1    t2    t

## FIG.2

$26_2$    $8_2$    $6_2$    $8_1$    $26_1$

$SC_2$    $6_1$    $SC_1$

30    14

28    $V_e$    32

16    $24_1$    $10_1$

$10_2$    4    $V_s$

12

18

## FIG.3

**FIG.4**

**FIG.6**

*FIG.5*

*FIG.7*

EP 1 320 920 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5737201 A

- GB 2294821 A

**Littérature non-brevet citée dans la description**

- **D. MIN ; J.-H KIM.** Novel topologies of AC choppers. *IEE Proceedings on Electr. Power Appl.,* Juillet 1996, vol. 143 (4), 323-330